# EUROPEAN PATENT SPECIFICATION

(11) **EP 0 886 099 B1**
(45) Date of publication and mention of the grant of the patent: **03.12.2003**
(21) Application number: 98202048.9
(22) Date of filing: 18.06.1998
(51) Int. Cl.: F16L 55/124, F16L 41/06

(54) **Method for shutting off the gas supply and apparatus for carrying out such method**
Verfahren zum Schliessen der Gasversorgung und Vorrichtung zur Durchführung des Verfahrens
Procédé pour arrêter l'alimentation en gaz et dispositif pour la mise en oeuvre du procédé

(30) Priority: 18.06.1997 NL 1006350
(43) Date of publication of application: 23.12.1998
(73) Proprietor: GASTEC N.V., NL-7327 AC Apeldoorn (NL)
(72) Inventor: Wichers Schreur, Peter Wilhelmus Maria, 7622 TA Borne (NL); Lock, Cornelis, 8016 CE Zwolle (NL)
(74) Representative: Smulders, Theodorus A.H.J., Ir.

(56) References cited:
- WO-A-91/06801
- GB-A- 316 334
- GB-A- 2 137 718
- NL-C- 1 001 320
- US-A- 2 899 983
- US-A- 5 577 776

## Description

The invention relates to a method for shutting off the gas supply from a gas pipe to a first saddle fitted over an opening in a sidewall of the gas pipe, wherein an inflatable shut-off bellows is introduced and inflated, such that when the shut-off bellows has been inflated, the opening is shut off by the shut-off bellows.

The invention also relates to an apparatus for temporarily shutting off an opening in a pipe such as a gas pipe, for which purpose it comprises a bar-shaped element having a first and a second opening, a channel extending on the inside of the bar-shaped element and forming a fluid connection between the first and the second opening, and a shut-off bellows connected to the bar-shaped element such that a gas flow path extends from the first opening, via the channel and the second opening, to the inside of the shut-off bellows for inflating and deflating the shut-off bellows via the first opening, the apparatus further comprising a distance piece which is mechanically connected to the shut-off bellows such that the distance piece and the bar-shaped element respectively extend on either side of the shut-off bellows and in a direction away from the shut-off bellows when the shut-off bellows has been inflated.

In gas distribution networks, saddles are often used for making house service connections to the gas main. Each saddle constitutes for instance a branch to a house.

Because of excavation works and ground loads, these saddles may be damaged and/or displaced such that replacement thereof is necessary. It also occurs that saddles are replaced when gas connecting lines are renovated. To enable for instance replacement of the first saddle, it must first be removed. To enable removal of the first saddle, the gas supply from the gas pipe to the first saddle is shut off. It is known to shut off the gas supply from the gas pipe to the first saddle by shutting off the gas supply to the entire gas pipe. However, this entails the drawback that other users connected to the gas pipe are likewise shut off from the supply of gas.

It is also known to shut off the gas supply from the gas pipe to the first saddle by fitting an additional saddle on both sides of the first saddle. These additional saddles are so-called blowhole saddles. By means of gas bladders, the pipe segment between the blowhole saddles can then be made gasless. Consequently, the gas supply from the gas pipe to the first saddle is interrupted. However, this, too, entails the problem of a gas flow through the gas pipe being blocked, so that users connected to the gas pipe downstream of the fitted gas bladders are also shut off from the supply of gas. A further drawback of this known method is that two additional blowhole saddles are necessary for removing the first saddle and the possible repositioning of a new second saddle. Also, in the known method utilizing the blowhole saddles, an amount of gas is released which was originally included in the pipe segment mentioned. This amount of gas has an adverse effect on the environment and on the safety during the operations to be performed.

A method according to the preamble of claim 1 is known from NL-A-1001320. In this method the shut-off is being realised within the opening. In this method, the gas supply from the gas pipe to the first saddle is shut off without the gas flow through the gas pipe being interrupted, without using additional blowhole saddles and without an amount of gas being released. This method is based upon the insight that by means of a shut-off bellows, only the opening in the sidewall of the gas pipe should be shut off to enable removal of the first saddle and, if necessary, replacement thereof by a new, second saddle.

It is an object of the invention to provide an alternative method which gives a solution to each of the above-mentioned drawbacks.
Accordingly, the method of the invention is characterized in that, the method comprises at least the following step:
1) the shut-off bellows is introduced into the gas pipe (4), and is positioned and inflated in the pipe such that the opening is shut off on the inside of the gas pipe by the shut-off bellows while the gas pipe itself is not shut off by the shut-off bellows, enabling a gas flow through the gas pipe to be maintained without interruption.

The shut-off bellows has dimensions such that in its inflated position, it does not shut off a complete through-flow area of the gas pipe.

In accordance with the invention, the apparatus for temporarily shutting off an opening in a pipe, such as a gas pipe, is characterized in that the apparatus is arranged for temporarily shutting off the opening on the inside of the gas pipe.

This apparatus can advantageously be used for performing the method according to the invention. In fact, an apparatus for temporarily shutting off an opening in a pipe such as a gas pipe is known per se. This apparatus then consists of, for instance, a shut-off cap fitted on the outside of the gas pipe. However, with the apparatus according to the invention, it is possible to temporarily shut off the opening on the inside of the gas pipe without the gas flow through the gas pipe having to be shut off for positioning the shut-off bellows in the gas pipe. The distance piece provides that the shut-off bellows is pressed against the inside of the gas pipe when the shut-off bellows shuts off the opening.

The invention will presently be specified with reference to the accompanying drawings. In these drawings:
Fig. 1a is a top plan view of a first embodiment of an apparatus according to the invention shutting off an opening in a gas pipe;
Fig. 1b shows a cross section taken on the line 1b of Fig. 1a;
Fig. 1c shows a cross section taken on the line 1c of Fig. 1a;
Fig. 1d shows a cross section of the apparatus in the same direction as shown in Fig. 1b when the apparatus is folded in;
Fig. 2a shows a cross section of a second embodiment of the apparatus of the invention in a direction according to Fig. 1c;
Fig. 2b shows a cross section of the apparatus of Fig. 2a in a direction according to Fig. 1b;
Fig. 3a shows a cross section of a gas pipe in the direction according to Fig. 1b, which gas pipe comprises a first saddle;
Fig. 3b shows the gas pipe and the first saddle according to Fig. 3a, with a shut-off housing provided on the first saddle;
Fig. 3c shows a cross section according to Fig. 3a, with an opening of a gas pipe being shut off by means of the apparatus according to Fig. 1a; and
Fig. 3d is a view of shut-off element according to Fig. 3b in the direction of the arrow p of Fig. 3b.

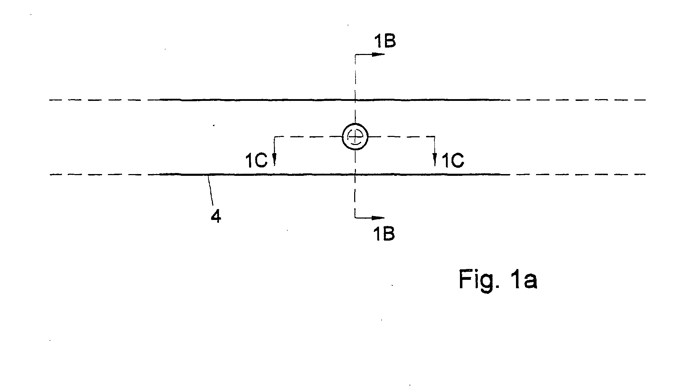

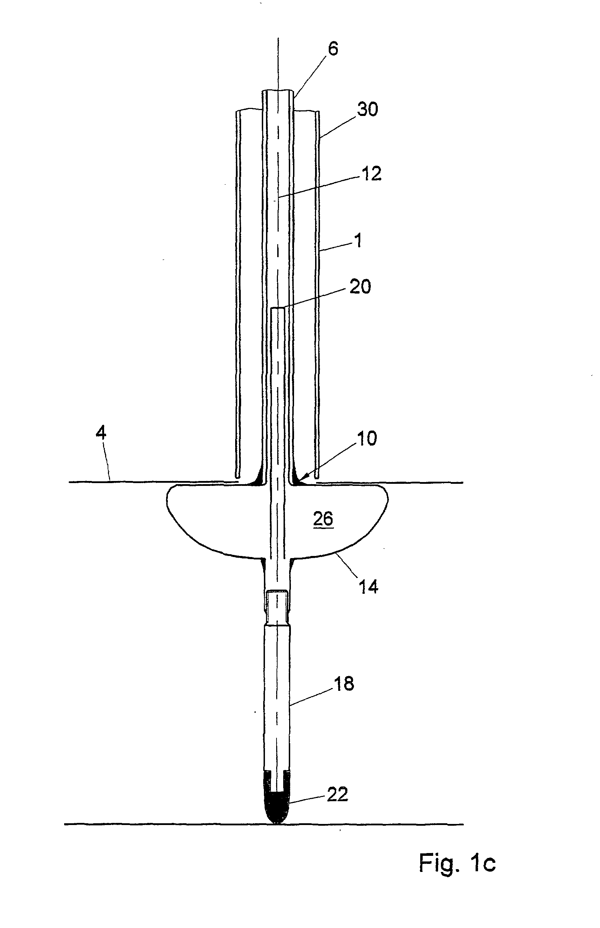

In Figs. 1a-1d, reference numeral 1 designates an apparatus for temporarily shutting off an opening 2 on the inside of a gas pipe 4.

The apparatus comprises a bar-shaped element 6 having a first and a second opening 8, 10. Further, the bar-shaped element comprises a channel 12 extending on the inside of the bar-shaped element and forming a fluid connection between the first and the second opening 8, 10. The apparatus further comprises a shut-off bellows 14 connected to the bar-shaped element 6 in such a manner that a gas flow path extends from the first opening 8, via the channel 12 and the second opening 10, to the inside of the shut-off bellows 14. The first opening 8 further comprises a rapid-action coupling 16 to which, for instance, an installation with compressed air can be connected for inflating the shut-off bellows 14. Via the rapid-action coupling 16, the compressed air can also be removed from the shut-off bellows 14, and a vacuum can even be created therein through suction, as shown in Fig. 1d.

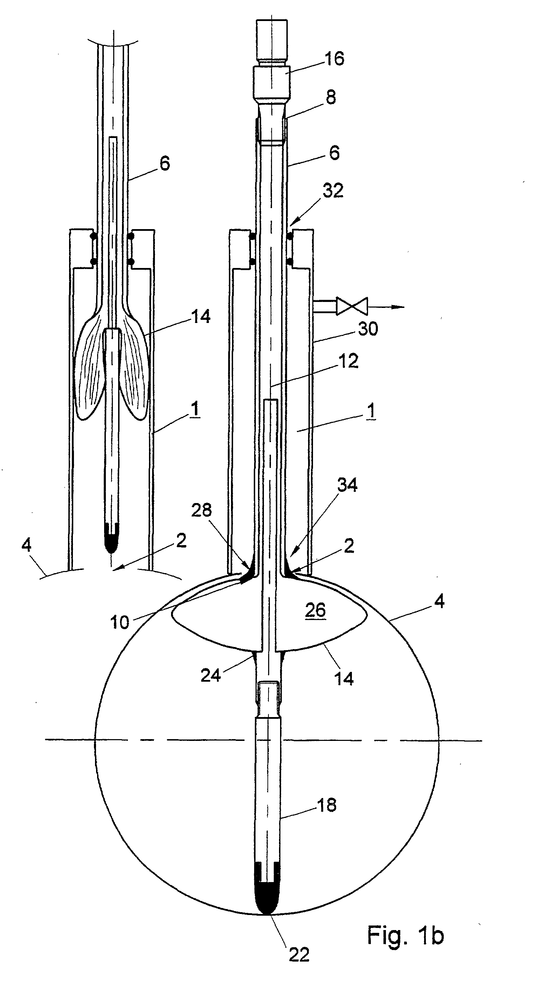

The apparatus further comprises a distance piece 18 which is mechanically connected to the shut-off bellows in such a manner that the distance piece 18 and the bar-shaped element 6 respectively extend on either side of the shut-off bellows 14 and in a direction away from the shut-off bellows 14 when the shut-off bellows 14 is inflated (see Figs. 1b and 1c). In this example, the distance piece 18 is of bar-shaped design. The longitudinal directions of the distance piece 18 and the bar-shaped element 6 are parallel to each other. The distance piece comprises a first and a second free end 20, 22, and at its first free end 20, the distance piece 18 is telescopically slidable in a receiving space 12 of the bar-shaped element 6. The first and second free ends 20, 22 are located on either side of the shut-off bellows when the shut-off bellows has been inflated (see Figs. 1b and 1c). In this example, the shut-off bellows 14 is at its bottom side 24 mechanically connected to the distance piece 18. Above the bottom side 24, the distance piece 18 extends in an inner space 26 of the shut-off bellows 14 into the channel 12 acting as the receiving space. The connection between the distance piece 18 and the shut-off bellows 14 is of gastight design at the bottom side 24 of the shut-off bellows. The connection between the second opening 10 and the shut-off bellows 14 at the top side 28 of the shut-off bellows is likewise of gastight design.

The apparatus further is further provided with a pipe sleeve 30 which is shorter than the bar-shaped element 6 and comprises first and second opposite open end 32, 34, the bar-shaped element 6 being telescopically slidably accommodated in the pipe sleeve 30 and projecting outside at the first and second open ends of the pipe sleeve.

For shutting off the opening 2, the pipe sleeve 30 is placed over the opening 2, as shown in Fig. 1d. This involves a vacuum being created in the shut-off bellows 14 via the first opening 8 through suction. Subsequently, the bar-shaped element 6 is slid down until the distance piece 18 touches the bottom of the pipe 4. After this, the bellows 14 can be inflated via the opening 8, as shown in Figs. 1b and 1c. Thus, the opening 2 of the gas pipe 4 is shut off by the bellows 14. Figs. 1b and 1c also clearly demonstrate that the gas pipe itself is not shut off by the bellows 14, enabling the gas flow through the gas pipe to be maintained without interruption.

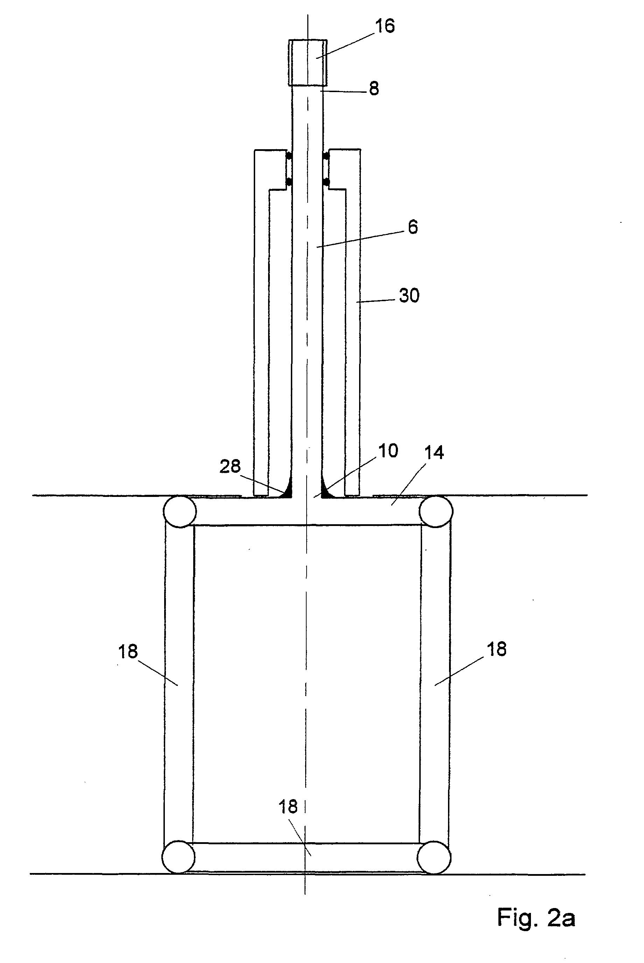

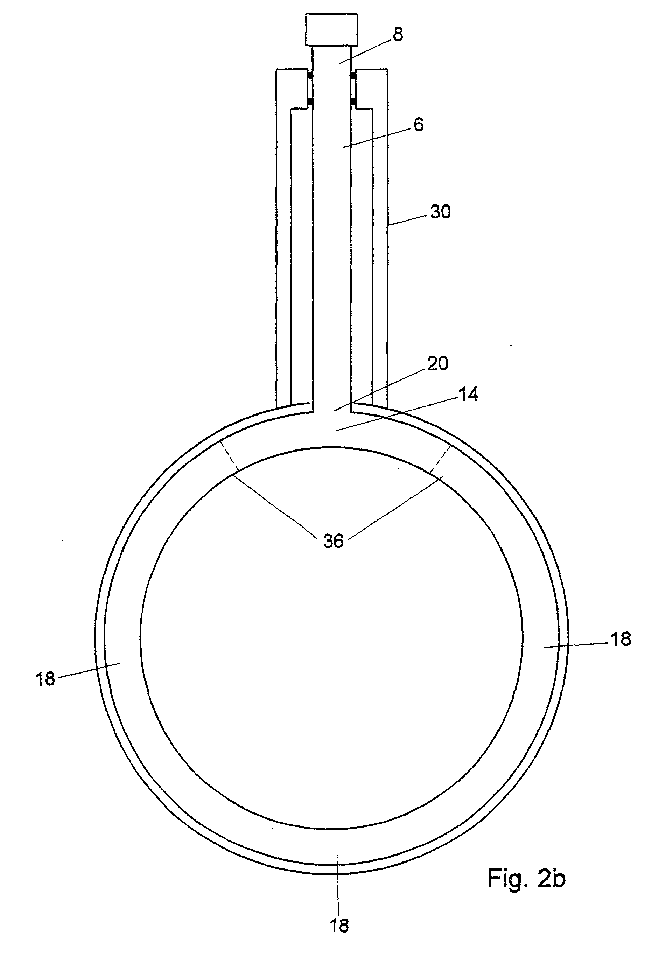

Figs. 2a and 2b show a second embodiment of an apparatus according to the invention. Parts corresponding to those of Figs. 1a-1d are provided with the same reference numerals. In the apparatus according to Figs. 2a and 2b, the distance piece 18 is formed by a distance bladder which is in fluid connection with the shut-off bellows 14. In Fig. 2b, the transition between the shut-off bellows 14 and the distance piece 18 is indicated diagrammatically by the dotted lines 36. In this example, the difference between the shut-off bellows 14 and the distance piece 18 is merely a functional difference. The shut-off bellows 14 and the distance piece 18 in fact form one whole. In inflated condition, the shut-off bellows and the distance piece in combination form at least substantially a hollow cylinder, as is clearly shown in Fig. 2b. Also in respect of the apparatus according to Figs. 2a and 2b, it applies that for shutting off the opening 2 in the gas pipe 4, the pipe sleeve 30 is positioned above or into the opening. Via the first opening 8, a vacuum can again be created in the shut-off bellows 14 and the distance piece 18. This will involve the bar-shaped element 6 still being slid upwards relative to the pipe sleeve 13, so that a combination of the shut-off bellows 14 and the distance piece 18 is located in the pipe sleeve 13. After the pipe sleeve 2 has thus been placed above the opening 2, the bar-shaped element 6 can be slid down. Accordingly, the shut-off bellows 14 and the distance piece 18 are introduced into the inner space of the tube 1. Next, the shut-off bellows 14 and the distance piece 18 are inflated via the opening 8, as shown in Figs. 2a and 2b. The opening 2 is then shut off by the shut-off bellows 14, while the distance piece 18 presses the shut-off bellows 14 against the inner wall of the gas pipe, causing the opening 10 to be shut off. For removing the shut-off bellows 14 and the distance piece 18, a vacuum is created in these parts again, via the first opening 8, whereupon the bar-shaped element 6 can be moved upwards. Next, the pipe sleeve 30 can be removed.

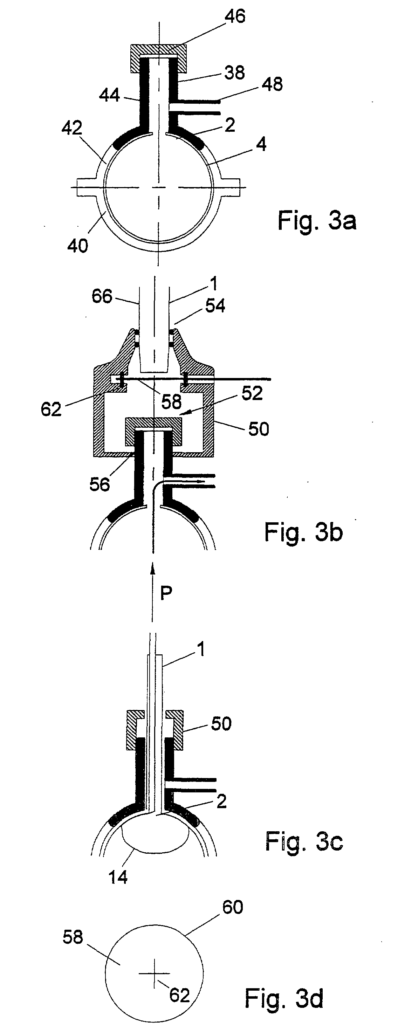

Presently, with reference to Figs. 3a-3c, a method according to the invention for shutting off the gas supply from the gas pipe 4 to a first saddle 38, known per se, will be explained. The first saddle 38 consists of a lower saddle 40 and an upper saddle 42, detachably interconnected and provided around the gas pipe 4. In the gas pipe, there is again an opening 2. At the location of the opening 2, the upper saddle 42 comprises a pipe piece 44 extending in radial direction away from the gas pipe 4. The pipe piece 44 has a free end which is shut off by a sealing cap 46. Further, via the opening 2, the pipe piece 44 is in fluid connection with the inside of the gas pipe 4. At midlength of the pipe piece 44, a gas line 48 branches off, which gas line, in this example, is connected to a house. In this manner, gas flows to the house in question via the gas pipe 4, the pipe piece 44 and the gas line 48. In this example, it is assumed that the first saddle 38 should be replaced by a new, second saddle. For this purpose, a shut-off housing 50 is used at first. The shut-off housing 50 (see Fig. 3b) comprises an inner space 52 having a first and a second open end 54, 56 located opposite each other. Arranged in the inner space 52 is a sealing element 58 which seals the first and second open ends 54, 56 relative to each other in a gastight manner. In this example, the sealing element 58 consists of a rubber sheet connected, by the edges thereof, to the sidewalls 62 of the inner space 52. Provided approximately at the center of the sealing element 58 are two slits 64 forming a cross. As shown in Fig. 3d, the sealing element 58 in its unstressed condition forms a gastight seal. Adjacent its second open end, the shut-off housing is gastightly connected to an outer side of the first saddle 38, in this example to the pipe piece 44 of the first saddle 38. The cap 46 is then located between the second open end 56 and the sealing element 58 (see Fig. 3b). Subsequently, a drill 66 is inserted at the first open end 54 and moved downwards. The drill 66 will then pierce the sealing element 58. However, the sealing element 58 will still form an at least substantially gastight seal with the drill 66. This also applies when the drill 66 is revolving. After this, the drill 66 is moved further down for drilling a hole in the cap 46. It is observed that during the drilling of the hole 46, the gas from the gas pipe 4 can still flow to the gas line 48. When a hole has thus been drilled in the cap 46, the drill 66 is moved upwards and removed f rom the shut-off housing 50. Accordingly, the sealing element 58 will close again, so that still no gas is released. Next, the apparatus 1, as shown in Figs. 1a-1c, is introduced into the shut-off housing 50 via the first open end 54. After this, the apparatus 1 (see Fig. 3b, where the apparatus 1 is shown diagrammatically in the same manner as the drill 66) is introduced, via the first open end 54, at the shut-off housing 50. Subsequently, the apparatus 1 is moved further down and will likewise pierce the sealing element 58. As the apparatus 1 is moved further down, it will be passed through the hole drilled in the cap 46. The apparatus 1 is moved so far down that the free end 22 of the distance piece 18 contacts the bottom of the gas pipe 4, as shown diagrammatically in Fig. 1b. Next, the shut-off bellows 14 is inflated as discussed with reference to Figs. 1a-1d. Here, too, the seal 58 in cooperation with the pipe sleeve 30 will form a seal when the apparatus 1 has been inserted to a depth as shown in Fig. 1b (for simplicity's sake, the first saddle 38 and the shut-off housing 50 are left out in Fig. 1b).

When the shut-off bellows 14 has been inflated, as shown diagrammatically in Fig. 3c, the opening 2 will be sealed by the shut-off bellows 14. Accordingly, no gas will be supplied to the gas line 48 anymore. However, gas can still flow through the gas pipe 4. This means that the gas supply to other saddles connected to the gas pipe 4 remains possible.

Subsequently, the shut-off housing 50 is removed. Also, the first saddle 38 can then be removed by uncoupling the lower saddle 40 and the upper saddle 42 from each other. The upper saddle 42 is then slid upwards from the apparatus 1, as it were. If necessary, a hose connected to the rapid-action coupling 16 for feeding air to the shut-off bellows 14 can be uncoupled in order to remove the upper saddle 42 entirely. After this, a new upper saddle can be repositioned and connected to a new lower saddle. Also, the shut-off housing 50 can then be placed back over the second saddle. In this manner, there is created a situation corresponding to the situation shown in Fig. 3c. The only difference is that the new saddle has not yet been provided with a sealing cap 46.

Subsequently, the opening 8 of the bar-shaped element can be connected to a vacuum pump via the rapid-action coupling 16. As a result, a vacuum is created in the shut-off bellows 14 through suction and the shut-off bellows will as it were shrink. After the creation of a vacuum in the shut-off bellows 14, the apparatus 1 can be moved upwards, so that the apparatus 1 and, accordingly, the shut-off bellows 14 are removed from the pipe. The sealing element 58 provides that no gas can escape after this. Next, via the first open end 54 of the shut-off housing 50, a new cap 46 can be placed on the new saddle. After this, the shut-off housing 50 can be removed. The effect of the above is that the first saddle has been replaced by a second saddle without the escape of gas.

## Claims

1. A method for shutting off the gas supply from a gas pipe (4) to a first saddle (38) fitted over an opening (2) in a sidewall of the gas pipe (4), wherein an inflatable shut-off bellows (14) is introduced and inflated such that when the shut-off bellows (14) has been inflated, the opening (2) is shut off by the shut-off bellows (14), **characterized in that** the method comprises at least the following step:
1) the shut-off bellows (14) is introduced into the gas pipe (4), and is positioned and inflated in the pipe (4) such that the opening (2) is shut off on the inside of the gas pipe (4) by the shut-off bellows (14) while the gas pipe (4) itself is not shut off by the shut-off bellows (14), enabling a gas flow through the gas pipe (4) to be maintained without interruption.

2. A method according to claim 1, **characterized in that** the method further comprises the following step:
2) the first saddle (38) is removed after the first method step has been performed.

3. A method according to claim 2, **characterized in that** the method further comprises the following step:
3) a second saddle is placed in the position of and in substitution for the first saddle (38) after the second method step has been performed.

4. A method according to any one of the preceding claims, **characterized in that** the method further comprises the following step:
4) a hole is drilled in the first saddle (38) before the first method step is performed.

5. A method according to claim 4, **characterized in that** the method further comprises the following step:
5) via the drilled hole in the first saddle (38) and the opening (2) in the gas pipe (4), the shut-off bellows (14) is introduced into the gas pipe (4) after the fourth method step has been performed and before the first method step is performed.

6. A method according to claim 4 or 5, **characterized in that** the method further comprises the following step:
6) before the fourth method step is performed, a shut-off housing (50) comprising an inner space (52) having first and second opposite open ends (54, 56) and, placed in the inner space (52), a sealing element (58) which seals the first and second open ends (54, 56) gastightly relative to each other, is at its second open end (56) gastightly connected to an outer side of the first saddle (38), and via the first open end (54) a drilling element (66) is introduced into the tubular element for drilling the hole, the sealing element (58) being arranged such that in cooperation with the drilling element (66) during drilling, it seals the first and second open ends (54, 56) gastightly relative to each other.

7. A method according to claim 6, **characterized in that** during the performance of the first method step, the shut-off bellows (14) is introduced into the pipe (4) via the first open end (54) of the shut-off housing (50) and the hole drilled in the first saddle (38), to be subsequently inflated.

8. A method according to claims 2 and 7, **characterized in that** in the second method step, the shut-off bellows (14) is removed.

9. A method according to claims 3 and 8, **characterized in that** the method further comprises the following step:
7) the shut-off bellows (14) is removed from the pipe (4) after the third method step has been performed.

10. A method according to any one of preceding claims 7-9, **characterized in that** the method further comprises the following step:
8) through suction, a vacuum is created in the shut-off bellows (14) during the positioning of the shut-off bellows (14) in and/or the removal of the shut-off bellows (14) from the gas pipe (4).

11. An apparatus (1) for temporarily shutting off an opening (2) in a pipe such as a gas pipe (4), for which purpose it comprises a bar-shaped element (6) having a first and a second opening (8, 10), a channel (12) extending on the inside of the bar-shaped element (6) and forming a fluid connection between the first and the second opening (8, 10), and a shut-off bellows (14) connected to the bar-shaped element (6) such that a gas flow path extends from the first opening (8), via the channel (12) and the second opening (10), to the inside of the shut-off bellows (14) for inflating and deflating the shut-off bellows (14) via the first opening (8), the apparatus (1) further comprising a distance piece (18) which is mechanically connected to the shut-off bellows (14) such that the distance piece (18) and the bar-shaped element (6) respectively extend on either side of the shut-off bellows (14) and in a direction away from the shut-off bellows (14) when the shut-off bellows (14) has been inflated, **characterized in that** the apparatus (1) is arranged for temporarily shutting off the opening (2) on the inside of the gas pipe (4).

12. An apparatus (1) according to claim 11, **characterized in that** the distance piece (18) is of bar-shaped design.

13. An apparatus (1) according to claim 12, **characterized in that** the longitudinal directions of the distance piece (18) and the bar-shaped element (6) are oriented parallel to each other.

14. An apparatus according to claim 12 or 13, **characterized in that** the distance piece (18) comprises a first and a second free end (20, 22), the distance piece (18) being telescopically slidable at its first free end (20) in a receiving space (20) of the bar-shaped element (6), and the first and second free ends (20, 22) being located on either side of the shut-off bellows (14) when the shut-off bellows has been inflated.

15. An apparatus (1) according to claim 14, **characterized in that** the distance piece (18) extends, via the second opening (22), into the channel (12) acting as receiving space (12).

16. An apparatus (1) according to claim 11, **characterized in that** the distance piece (18) is formed by a distance bladder which is in fluid connection with the shut-off bellows (14).

17. An apparatus according to claim 16, **characterized in that** in combination, the shut-off bellows (14) and the distance bladder in inflated condition at least substantially assume the form of a hollow cylinder.

18. An apparatus (1) according to any one of preceding claims 11-17, **characterized in that** the apparatus (1) is further provided with a pipe sleeve (30) which is shorter than the bar-shaped element (6) and comprises first and a second opposite open ends, the bar-shaped element (6) being telescopically slidably accommodated in the pipe sleeve (30) and projecting outside at the first and second open ends of the pipe sleeve.

## Patentansprüche

1. Verfahren zum Schließen der Gas-Zufuhr von einer Gas-Rohrleitung (4) zu einem ersten Sattel (38), der über einer Öffnung (2) in einer Seitenwand von der Gas-Rohrleitung (4) vorgesehen ist, wobei ein aufblasbarer Verschluß-Balg (14) eingesetzt und aufgeblasen wird, so dass dann, wenn der Verschluß-Balg (14) aufgeblasen ist, die Öffnung (2) durch den Verschluß-Balg (14) geschlossen ist, **dadurch gekennzeichnet, dass** das Verfahren zumindest die folgenden Schritte umfasst:
1) der Verschluß-Blasebalg (14) wird in die Gas-Rohrleitung (4) eingesetzt und wird in der Rohrleitung (4) positioniert und aufgeblasen, so dass die Öffnung (2) an der Innenseite der Gas-Rohrleitung (4) durch den Verschluß-Balg (14) geschlossen wird, während die Gas-Rohrleitung (4) selbst durch den Verschluß-Balg (14) nicht geschlossen wird, wodurch ermöglicht wird, dass eine Gas-Strömung durch die Gas-Rohrleitung (4) ohne Unterbrechung aufrechterhalten bleibt.

2. Verfahren nach Anspruch 1, **dadurch gekennzeichnet, dass** das Verfahren außerdem den folgenden Schritt umfasst:
2) der erste Sattel (38) wird entfernt, nachdem der erste Verfahrensschritt durchgeführt wurde.

3. Verfahren nach Anspruch 2, **dadurch gekennzeichnet, dass** das Verfahren außerdem den folgenden Schritt umfasst:
3) ein zweiter Sattel wird im Austausch gegen den ersten Sattel (38) in dessen Position angeordnet, nachdem der zweite Verfahrensschritt zu durchgeführt wurde.

4. Verfahren nach einem der vorhergehenden Ansprüche, **dadurch gekennzeichnet, dass** das Verfahren außerdem den folgenden Schritt umfasst:
4) ein Loch wird in den ersten Sattel (38) gebohrt, bevor der erste Verfahrensschritt durchgeführt wird.

5. Verfahren nach Anspruch 4, **dadurch gekennzeichnet, dass** das Verfahren außerdem den folgenden Schritt umfasst:
5) über das gebohrte Rohr in dem ersten Sattel (38) und die Öffnung (2) in der Gas-Rohrleitung (4) wird der Verschluß-Balg (14) in die Gas-Rohrleitung (4) eingesetzt, nachdem der vierte Verfahrensschritt durchgeführt wurde und bevor der erste Verfahrensschritt durchgeführt wird.

6. verfahren nach Anspruch 4 oder 5, **dadurch gekennzeichnet, dass** das Verfahren außerdem den folgenden Schritt umfasst:
6) bevor der vierte Verfahrensschritt durchgeführt wird, wird ein Verschluß-Gehäuse (50), das einen Innenraum (52) mit einem offenen ersten und einem offenen gegenüberliegenden zweiten Ende (54, 56) und, angeordnet in dem Inneraum (52), ein Dichtungselement (58) aufweist, das das offene erste und das offene zweite Ende (54, 56) relativ zueinander gasdicht abdichtet, an seinem offenen zweiten Ende (56) gasdicht mit einer äußeren Seite von dem ersten Sattel (38) verbunden, und, über das offene erste Ende (54), wird ein Bohrelement (66) in das rohrförmige Element eingesetzt, um das Loch zu bohren, wobei das Dichtungselement (58) so angeordnet ist, dass es in Zusammenwirkung mit dem Bohrelement (66) während des Bohrens das offene erste und das offene zweite Ende (54, 56) relativ zueinander gasdicht abdichtet.

7. Verfahren nach Anspruch 6, **dadurch gekennzeichnet, dass** während der Durchführung des ersten Verfahrensschritts der Verschluß-Balg (14) in die Rohrleitung (4) durch das offene erste Ende (54) des Verschluß-Gehäuses (50) und durch das in dem ersten Sattel (38) gebohrte Loch eingesetzt und dann aufgeblasen wird.

8. Verfahren nach einem der Ansprüche 2 und 7, **dadurch gekennzeichnet, dass** in dem zweiten Verfahrensschritt der Verschluß-Balg (14) entfernt wird.

9. Verfahren nach einem der Ansprüche 3 und 8, **dadurch gekennzeichnet, dass** das Verfahren außerdem den folgenden Schritt umfasst:
7) der Verschluß-Balg (14) wird aus der Rohrleitung (4) entfernt, nachdem der dritte verfahrensschritt durchgeführt wurde.

10. Verfahren nach einem der vorhergehenden Ansprüche 7-9, **dadurch gekennzeichnet, dass** das Verfahren außerdem den folgenden Schritt umfasst:
8) durch Saugwirkung wird ein Vakuum in dem Verschluß-Balg (14) während der Anordnung des Verschluß-Balgs (14) in der Gas-Rohrleitung (4) und/oder während des Entfernens des Verschluß-Balgs (14) aus der Gas-Rohrleitung (4) erzeugt.

11. Vorrichtung (1) zum temporären Schließen einer Öffnung (2) in einer Rohrleitung, wie zum Beispiel eine Gas-Rohrleitung (4), die für diesen Zweck ein stangenförmiges Element (6) mit einer ersten und einer zweiten Öffnung (10), einem Kanal (12), der sich an der Innenseite des stangenförmigen Elements (6) erstreckt und eine Fluid-Verbindung zwischen der ersten und der zweiten Öffnung (8, 10) bildet, und einem Verschluß-Balg (14) aufweist, der mit dem stangenförmigen Element (6) verbunden ist, so dass sich ein Gas-Strömungspfad von der ersten Öffnung (8) , über den Kanal (12) und die zweite Öffnung (10) in das Innere des Verschluß-Balgs (14) erstreckt, um den Verschluß-Balg (14) über die erste Öffnung (8) aufzublasen und abzublasen, wobei die Vorrichtung (1) außerdem ein Distanzstück (18) aufweist, das mechanisch mit dem Verschluß-Balg (14) verbunden ist, so dass sich das Distanzstück (18) und das stangenförmige Element (6) an jeder Seite des Verschluß-Balgs (14) und in eine Richtung weg von dem Verschluß-Balg (14) erstrecken, wenn der Verschluß-Balg (14) aufgeblasen ist, **dadurch gekennzeichnet, dass** die Vorrichtung (1) dazu ausgestaltet ist, um temporär die Öffnung (2) an der Innenseite der Gas-Rohrleitung (4) zu schließen.

12. Vorrichtung (1) nach Anspruch 11, **dadurch gekennzeichnet, dass** das Distanzstück (18) eine stangenförmige Konstruktion hat.

13. Vorrichtung (1) nach Anspruch 12, **dadurch gekennzeichnet, dass** die Längsrichtungen von dem Distanzstück (18) und von dem stangenförmigen Element (6) parallel zueinander ausgerichtet sind.

14. Vorrichtung nach Anspruch 12 oder 13, **dadurch gekennzeichnet, dass** das Distanzstück (18) ein erstes und ein zweites Ende (20, 22) aufweist, das Distanzstück (18) teleskopartig an seinem ersten freien Ende (20) in einem Aufnahmeraum (20) von dem stangenförmigen Element (6) verschiebbar ist, und das erste und das zweite freie Ende (20, 22) an jeder Seite des Verschluß-Balgs (14) angeordnet sind, wenn der Verschluß-Balg aufgeblasen ist.

15. Vorrichtung (1) nach Anspruch 14, **dadurch gekennzeichnet, dass** sich das Distanzstück (18) über die zweite öffnung (22) in den Kanal (12) erstreckt, der als Aufnahmeraum (12) dient.

16. Vorrichtung (1) nach Anspruch 11, **dadurch gekennzeichnet, dass** das Distanzstück (18) durch einen Distanz-Balg gebildet ist, der sich mit dem Verschluß-Balg (14) in Fluid-Verbindung befindet.

17. Vorrichtung nach Anspruch 16, **dadurch gekennzeichnet, dass** der Verschluß-Balg (14) und der Distanz-Balg in Kombination im aufgeblasenen Zustand zumindest im wesentlichen die Form eines hohlen Zylinders einnehmen.

18. Vorrichtung (1) nach einem der vorhergehenden Ansprüche 11-17, **dadurch gekennzeichnet, dass** die Vorrichtung (1) außerdem mit einer Rohrmuffe (30) versehen ist, die kürzer ist als das stangenförmige Element (6) und ein offenes erstes sowie ein gegenüberliegendes offenes zweites Ende hat, wobei das stangenförmige Element (6) teleskopartig verschiebbar in der Rohrmuffe (30) aufgenommen ist und an dem offenen ersten und dem offenen zweiten Ende der Rohrmuffe nach außen vorsteht.

## Revendications

1. Procédé pour arrêter l'alimentation en gaz d'un tuyau de gaz (4) à une première selle de raccordement (38) montée sur une ouverture (2) présente dans une paroi latérale du tuyau de gaz (4), dans lequel on introduit et on gonfle un soufflet d'arrêt gonflable (14) de telle manière que, lorsque le soufflet d'arrêt (14) a été gonflé, l'ouverture (2) est fermée par le soufflet d'arrêt (14), **caractérisé en ce que** le procédé comprend au moins l'étape suivante :
1) on introduit le soufflet d'arrêt (14) dans le tuyau de gaz (4), puis on le positionne et on le gonfle dans le tuyau (4) de telle manière que l'ouverture (2) est fermée à l'intérieur du tuyau de gaz (4) par le soufflet d'arrêt (14) alors que le tuyau de gaz (4) lui-même n'est pas fermé par le soufflet d'arrêt (14), permettant à un flux de gaz dans le tuyau de gaz (4) d'être maintenu sans interruption.

2. Procédé selon la revendication 1, **caractérisé en ce que** le procédé comprend en outre l' étape suivante :
2) la première selle de raccordement (38) est retirée après que la première étape du procédé a été exécutée.

3. Procédé selon la revendication 2, **caractérisé en ce que** le procédé comprend en outre l'étape suivante :
3) une deuxième selle de raccordement est mise dans la position de la première selle de raccordement (38) et en substitution de celle-ci après que la deuxième étape du procédé a été exécutée.

4. Procédé selon l'une quelconque des revendications précédentes, **caractérisé en ce que** le procédé comprend en outre l'étape suivante :
4) on perce un trou dans la première selle de raccordement (38) avant l'exécution de la première étape du procédé.

5. Procédé selon la revendication 4, **caractérisé en ce que** le procédé comprend en outre l'étape suivante :
5) on introduit, via le trou percé dans la première selle de raccordement (38) et l'ouverture (2) présente dans le tuyau de gaz (4), le soufflet d'arrêt (14) dans le tuyau de gaz (4) après l'exécution de la quatrième étape du procédé et avant l'exécution de la première étape du procédé.

6. Procédé selon la revendication 4 ou 5, **caractérisé en ce que** le procédé comprend en outre l'étape suivante :
6) avant l'exécution de la quatrième étape du procédé, un boîtier d'arrêt (50) comprenant un espace intérieur (52) ayant une première et une deuxième extrémité ouverte (54, 56) opposées et, placé dans l'espace intérieur (52), un élément d'étanchéité (58) qui rend étanches aux gaz les première et deuxième extrémités ouvertes (54, 56) l'une par rapport à l' autre, est, à sa deuxième extrémité ouverte (56), connecté de manière étanche aux gaz à un côté extérieur de la première selle de raccordement (38), et l'on introduit via la première extrémité ouverte (54) un élément de perçage (66) dans l'élément tubulaire pour percer le trou, l'élément d'étanchéité (58) étant agencé de telle manière que, en coopération avec l'élément de perçage (66) pendant le perçage, il rend étanches aux gaz les première et deuxième extrémités ouvertes (54, 56) l'une par rapport à l'autre.

7. Procédé selon la revendication 6, **caractérisé en ce que** pendant l'exécution de la première étape du procédé, le soufflet d'arrêt (14) est introduit dans le tuyau (4) via la première extrémité ouverte (54) du boîtier d'arrêt (50) et le trou percé dans la première selle de raccordement (38), pour être gonflé ultérieurement.

8. Procédé selon les revendications 2 et 7, **caractérisé en ce que** pendant la deuxième étape du procédé, on retire le soufflet d'arrêt (14).

9. Procédé selon les revendications 3 et 8, **caractérisé en ce que** le procédé comprend en outre l'étape suivante :
7) on retire le soufflet d'arrêt (14) du tuyau (4) après que la troisième étape du procédé a été exécutée.

10. Procédé selon l'une quelconque des revendications 7 à 9, **caractérisé en ce que** le procédé comprend en outre l'étape suivante :
8) par aspiration, on crée un vide dans le soufflet d'arrêt (14) pendant le positionnement du soufflet d'arrêt (14) dans et/ou le retrait du soufflet d'arrêt (14) du tuyau de gaz (4).

11. Dispositif (1) pour fermer temporairement une ouverture (2) présente dans un tuyau tel qu'un tuyau de gaz (4), lequel dispositif comprend un élément en forme de barre (6) comportant une première et une deuxième ouverture (8, 10), un canal (12) s'étendant à l'intérieur de l'élément en forme de barre (6) et formant une connexion fluide entre la première et la deuxième ouvertures (8, 10), et un soufflet d'arrêt (14) connecté à l'élément en forme de barre (6) de telle manière qu'un chemin d'écoulement de gaz s'étend de la première ouverture (8) à l'intérieur du soufflet d'arrêt (14) via le canal (12) et la deuxième ouverture (10) pour gonfler et dégonfler le soufflet d'arrêt (14) via la première ouverture (8), le dispositif (1) comprenant en outre une pièce intercalaire (18) qui est connectée mécaniquement au soufflet d'arrêt (14) de telle manière que la pièce intercalaire (18) et l'élément en forme de barre (6) s'étendent respectivement de chaque côté du soufflet d'arrêt (14) et dans une direction s'écartant du soufflet d'arrêt (14) quand le soufflet d'arrêt (14) est gonflé, **caractérisé en ce que** le dispositif (1) est prévu pour fermer temporairement l'ouverture (2) à l'intérieur du tuyau de gaz (4).

12. Dispositif (1) selon la revendication 11, **caractérisé en ce que** la pièce intercalaire (18) est en forme de barre.

13. Dispositif (1) selon la revendication 12, **caractérisé en ce que** les directions longitudinales de la pièce intercalaire (18) et de l'élément en forme de barre (6) sont parallèles entre elles.

14. Dispositif (1) selon la revendication 12 ou 13, **caractérisé en ce que** la pièce intercalaire (18) comprend une première et une deuxième extrémité libre (20, 22), la pièce intercalaire (18) pouvant glisser de manière télescopique à sa première extrémité libre (20) dans un espace récepteur (20) de l'élément en forme de barre (6), et les première et deuxième extrémités libres (20, 22) étant situées de chaque côté du soufflet d'arrêt (14) lorsque le soufflet d'arrêt est gonflé.

15. Dispositif (1) selon la revendication 14, **caractérisé en ce que** la pièce intercalaire (18) s'étend, via la deuxième ouverture (22), dans le canal (12) servant d'espace récepteur (12).

16. Dispositif (1) selon la revendication 11, **caractérisé en ce que** la pièce intercalaire (18) est formée par une vessie intercalaire qui est en connexion fluide avec le soufflet d'arrêt (14).

17. Dispositif (1) selon la revendication 16, **caractérisé en ce que** le soufflet d'arrêt (14) et la vessie intercalaire, dans un état gonflé et en combinaison, prennent au moins substantiellement la forme d'un cylindre creux.

18. Dispositif (1) selon l'une quelconque des revendications 11 à 17, **caractérisé en ce que** le dispositif (1) est en outre muni d'un manchon (30) de tuyau qui est plus court que l'élément en forme de barre (6) et comprend une première et une deuxième extrémité ouverte opposées, l'élément en forme de barre (6) étant logé à coulissement de manière télescopique dans le manchon (30) de tuyau et faisant saillie à l'extérieur au niveau des première et deuxième extrémités ouvertes du manchon de tuyau.
